# DEMANDE DE BREVET EUROPEEN

(11) **EP 4 311 820 A1**
(43) Date de publication de la demande: **31.01.2024**
(21) Numéro de dépôt: 22187737.6
(22) Date de dépôt: 29.07.2022
(51) Int. Cl.: C04B 41/85, G04B 37/22

(54) **FABRICATION D'UN COMPOSANT EN CÉRAMIQUE MULTICOLORE**

(71) Demandeur: ROLEX SA, 1211 Genève 26 (CH)
(72) Inventeur: BIENVENU, Carine, 74370 Pringy (FR); HUGUET, Pierre, 74200 Allinges (FR)
(74) Mandataire: Moinas & Savoye SARL

(57) **Abrégé**

Procédé de fabrication d'un composant horloger en céramique, caractérisé en ce qu'il comprend les étapes suivantes :
- Fabriquer un composant intermédiaire (E1) sous forme de corps vert à base de zircone cériée,
- Délianter (E2) totalement ou partiellement le composant intermédiaire pour obtenir un composant intermédiaire délianté ;
- Imprégner (E3) partiellement le composant intermédiaire délianté avec au moins une solution comprenant au moins un sel métallique, depuis une partie seulement de sa surface, pour obtenir un composant intermédiaire délianté imprégné ;
- Fritter et traiter thermiquement (E4) le composant intermédiaire délianté imprégné par au moins une étape de traitement thermique sous atmosphère réductrice (E42 ; E41').

## Description

### Introduction

La présente invention concerne un composant horloger en céramique bicolore, voire multicolore, à base de zircone, plus particulièrement un composant horloger en céramique technique frittée. Elle porte aussi sur une pièce d'horlogerie comprenant un tel composant horloger. Elle porte enfin sur un procédé de fabrication d'un composant horloger en céramique bicolore, voire multicolore, à base de zircone.

### Etat de l'Art

Dans le domaine de l'horlogerie, de même que dans la bijouterie ou la joaillerie, il est connu d'utiliser des composants en céramique technique, que nous appellerons aussi plus simplement céramique. L'adjectif « technique » fait référence aux propriétés de haute performance des céramiques choisies. En effet, ces céramiques techniques peuvent atteindre des propriétés mécaniques, thermiques, voire électriques, et/ou biochimiques, très élevées, ainsi qu'une inertie chimique et un amagnétisme, qui les rendent appropriées pour une utilisation pour former des composants horlogers, notamment des composants de mouvements horlogers, mais aussi des composants d'habillage. Les céramiques techniques se distinguent des céramiques traditionnelles par leur composition, puisqu'elles sont issues de poudres synthétiques purifiées et non pas de poudres minérales naturelles comme par exemple du feldspath ou du kaolin.

Parmi les céramiques techniques, les céramiques à base de zircone sont couramment utilisées parce qu'elles possèdent des propriétés mécaniques élevées. Toutefois, un inconvénient des céramiques à base de zircone est qu'elles se présentent naturellement sous la forme d'un corps de couleur blanche. Une des exigences de l'horlogerie est l'aspect attractif du matériau utilisé, ce qui s'applique naturellement à la couleur. Il existe ainsi plusieurs étapes pour colorer de telles céramiques dans l'état de la technique, par exemple par l'utilisation de pigments de coloration, ce qui complexifie le procédé de fabrication, tout en ajoutant d'autres inconvénients. Notamment, une limite dans l'utilisation de ces composants en céramique provient de la difficulté, voire l'impossibilité, à obtenir certaines couleurs, et notamment la combinaison de plusieurs couleurs, comme les couleurs rouge et noire par exemple. Plus généralement encore, il existe des difficultés à obtenir une même couleur homogène, prévisible et reproductible.

Ainsi, le but général de la présente invention est de proposer une solution de fabrication d'un composant en céramique, notamment pour une pièce d'horlogerie, qui ne comprend pas les inconvénients de l'état de la technique.

Plus précisément, un premier objet de la présente invention est de proposer une solution de fabrication d'un composant en céramique qui permet d'obtenir une céramique dont la coloration est maîtrisée, permettant notamment d'obtenir un résultat multicolore, notamment bicolore, notamment rouge et noir.

Un deuxième objet de la présente invention est de proposer une solution de fabrication d'un composant en céramique dont la couleur est fiable et reproductible.

Un troisième objet de la présente invention est de proposer une solution de fabrication d'un composant en céramique, qui soit la plus simple possible et qui permet d'obtenir une céramique aux propriétés techniques satisfaisantes, compatibles avec une utilisation comme composant horloger.

### Brève description de l'invention

A cet effet, l'invention repose sur un procédé de fabrication d'un composant horloger en céramique, caractérisé en ce qu'il comprend les étapes suivantes :
- Fabriquer un composant intermédiaire sous forme de corps vert à base de zircone cériée,
- Délianter totalement ou partiellement le composant intermédiaire pour obtenir un composant intermédiaire délianté ;
- Imprégner localement le composant intermédiaire délianté avec au moins une solution comprenant au moins un sel métallique, par ou depuis une partie seulement de sa surface, pour obtenir un composant intermédiaire délianté imprégné ;
- Fritter et traiter thermiquement le composant intermédiaire délianté imprégné par au moins une étape de traitement thermique sous atmosphère réductrice.

L'invention porte aussi sur un composant horloger en céramique, caractérisé en ce qu'il est à base de zircone cériée, en ce qu'il est monobloc d'un seul tenant et bicolore, voire multicolore, comprenant au moins une première partie dans une première couleur et une deuxième partie dans une deuxième couleur différente de la première couleur, notamment comprenant une première couleur rouge et une deuxième couleur noire.

L'invention est plus précisément définie par les revendications.

### Brève description des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente un logigramme des étapes du procédé de fabrication d'un composant horloger en céramique selon un mode de réalisation de la présente invention.
Les figures 2a à 2c représentent l'évolution de la température en fonction du temps selon trois exemples de traitements thermiques selon trois variantes du mode de réalisation de l'invention.
La figure 3 schématise un disque de lunette obtenu après l'étape de frittage sous atmosphère oxydante qui correspond à une première sous-étape de traitement thermique selon un premier exemple d'un mode de réalisation de l'invention.
La figure 4 schématise le disque de lunette de la figure 3 obtenu après une étape de traitement thermique sous atmosphère réductrice qui correspond à une deuxième sous-étape de traitement thermique selon le premier exemple d'un mode de réalisation de l'invention.
La figure 5 comprend deux tableaux détaillant les propriétés de plusieurs céramiques obtenues selon différents exemples de réalisation de l'invention.
La figure 6 illustre des disques de lunette obtenus par un mode de réalisation de l'invention à partir de matières premières comprenant des proportions d'oxyde de cérium et d'alumine différentes.

Par la suite, nous désignerons par composant en céramique un élément obtenu dans un matériau comprenant principalement au moins une céramique dense. Par céramique « dense », nous entendons une céramique dont la densité est comprise entre 95% et 100% de la densité théorique du matériau considéré. Dans ce document, les termes de « céramique » ou de « céramique technique » désignent les matériaux denses à base d'oxyde de zirconium stabilisé.

De plus, nous entendrons par « à base de zircone » un matériau qui comprend dans tous les cas majoritairement une composante de zircone, en proportion en poids d'au moins 50%, voire d'au moins 75%, voire d'au moins 90%. Par exemple, le matériau céramique selon l'invention comprend au moins 50% en poids de zircone.

Dans tous les cas, la céramique (i.e. « dense ») selon l'invention ne contient pas de composé organique. Ainsi, nous désignerons par le terme générique de céramique liantée un matériau composite constitué par de la céramique et un liant, généralement constitué par un ou plusieurs composés organiques, dans des proportions variables. Nous désignerons par le terme de « corps vert » une céramique liantée et mise en forme. A ce stade, la céramique est crue.

Le procédé de fabrication d'un corps en céramique selon un mode de réalisation de l'invention comprend les étapes schématiquement détaillées ci-après.

Une première étape du procédé de fabrication selon un mode de réalisation consiste à fabriquer un composant intermédiaire E1 sous forme de corps vert à base de zircone cériée. Ce composant intermédiaire se présente sous sa forme finie ou semi-finie. A ce stade, le composant est cru.

Cette première étape peut comprendre les sous-étapes explicitées ci-dessous.

Dans une première sous-étape, le procédé de fabrication d'un composant en céramique comprend la préparation de la matière première E11, c'est-à-dire une poudre céramique à base de zircone. Selon un mode de réalisation, cette poudre à base de zircone comprend de l'oxyde de cérium CeO₂. Pour cette raison, nous utiliserons le terme de « zircone cériée » pour désigner une poudre de céramique ou une céramique, à base de zircone comprenant en poids au moins 50% de zircone, et de l'oxyde de cérium. Selon un mode de réalisation, l'oxyde de cérium est présent selon une proportion massique comprise entre 3% et 6%, voire entre 3% et 5% du total. De plus, la poudre à base de zircone est stabilisée à l'yttria (ou oxyde d'yttrium) (Y₂O₃), par exemple par une proportion comprise entre 1.4% et 4% molaire d'oxyde d'yttrium Y₂O₃, proportion calculée par rapport à la zircone ; la proportion d'yttria est calculée selon : n(Y₂O₃)/[n(Y₂O₃)+n(ZrO₂)], avec n, la quantité de matière. Enfin, avantageusement, la poudre comprend de l'alumine. Cette alumine est intéressante pour son effet sur la couleur finale. Elle peut être apportée à un stade ultérieur du procédé, en variante ou complément à son introduction dans la poudre à base de zircone à ce stade. Les proportions d'alumine peuvent par exemple varier entre 0.1 et 1% massique. Cette proportion a un effet sur la couleur finale obtenue, notamment la teinte et l'opacité.

Une deuxième sous-étape du procédé de fabrication consiste à intégrer un liant E12 à la poudre céramique obtenue par la première sous-étape. Un tel liant est en général constitué d'un ou plusieurs composés organiques. On obtient alors une poudre céramique liantée.

Une troisième sous-étape consiste en une mise en forme E13 du composant en céramique, qui permet d'obtenir le composant intermédiaire. Pour cela, une première approche comprend une étape de pressage d'un agglomérat de particules liantées obtenues en fin de la deuxième sous-étape : dans un tel procédé, la deuxième sous-étape prépare une poudre céramique liantée sous forme de granules atomisés de pressage. Une deuxième approche consiste en une mise en forme par injection dans un moule. Dans un tel cas, la préparation résultant de la deuxième sous-étape est une poudre céramique liantée appelée par sa dénomination anglaise « feedstock ». Une troisième approche consiste en une mise en forme par coulage dans un moule, communément appelée coulage en barbotine, suivie d'un séchage. Dans un tel cas, la préparation résultant de la deuxième sous-étape est une poudre céramique liantée en suspension appelée par sa dénomination anglaise « slurry » et barbotine en français. A la fin de la troisième sous-étape, on obtient un composant en céramique, appelé corps vert comme défini précédemment, qui présente une forme qui se rapproche de sa forme finale et contient à la fois la poudre céramique et le liant. D'autres techniques de mise en forme pourraient en variante être utilisées, comme le gel casting, le freeze casting ou encore les techniques de coagulation casting.

Une deuxième étape du mode de réalisation consiste à délianter E2 totalement ou partiellement le composant intermédiaire pour obtenir un composant intermédiaire délianté. Ce déliantage, appliqué au composant intermédiaire, peut être réalisée de plusieurs manières :
- Soit par un traitement thermique ;
- Soit par un traitement à l'aide d'une solution (solvant), qui peut par exemple être aqueuse ;
- Soit de manière mixte, à l'aide d'une solution (solvant) et un traitement thermique combinés.
Cette étape provoque l'extraction d'au moins une partie des liants : c'est donc un déliantage total ou un déliantage partiel. Pour la simplification des notations, cette étape est alors appelée « déliantage ». Le composant résultant est au moins partiellement délianté. À ce stade, il forme un corps monomatière, que nous appelons composant intermédiaire délianté. Outre ce déliantage, l'étape E2 peut optionnellement intégrer un traitement thermique de « pré-frittage », qui permet un début de densification (diminution de la porosité) du composant pour le rendre moins fragile lors des manipulations. Lors d'un tel traitement thermique unique, on peut considérer que le déliantage se déroule jusqu'à 450°C, et le pré-frittage se déroule aux températures supérieures. Nous utiliserons donc le terme de déliantage au sens large, pouvant inclure un pré-frittage complémentaire.

La troisième étape consiste à imprégner E3 localement le composant intermédiaire délianté avec au moins une solution comprenant au moins un sel métallique, depuis une partie seulement de sa surface, pour obtenir un composant intermédiaire délianté (localement) imprégné. La localisation des zones imprégnées sur la surface du composant est déterminante pour l'esthétique du résultat final. Ces zones imprégnées peuvent représenter des portions géométriques de la surface. Elles peuvent également recouvrir intégralement une surface du composant, voir recouvrir intégralement toutes les surfaces du composant.

Cette étape d'imprégnation est par exemple réalisée selon la méthode décrite dans le document CH707424. Elle peut comprendre l'utilisation d'une solution aqueuse dans laquelle l'élément additionnel est présent sous la forme d'un sel métallique. Elle peut être appliquée de différentes façons, par exemple manuellement ou par impression jet d'encre. Différentes solutions aqueuses de sels (nitrates, chlorures, etc.) et de métaux (nickel, fer, cobalt, aluminium, etc.) peuvent être utilisées, afin d'obtenir des couleurs différentes. Par exemple, le sel métallique peut être choisi parmi les éléments Co, Fe, Mn, Ni, et Al. En effet, cette imprégnation apporte des sels dans la céramique, qui formeront des pigments en mesure d'être ensuite réduits : ces pigments, selon leur nature, prennent différentes couleurs une fois réduits, comme cela sera illustré par la suite sur la base d'exemples particuliers de réalisation. En particulier, ils pourront devenir orange, brun, gris et avantageusement noirs. En remarque, les éléments Co, Fe, Mn, Ni permettent d'obtenir une couleur noire. En remarque, l'alumine, qui a été envisagée dans la composition de la poudre céramique initiale pour son effet sur la couleur, pourrait en variante ou complément être apportée au composant intermédiaire délianté par cette étape d'imprégnation, par exemple par le biais de sels d'aluminium. En remarque, lors de cette étape d'imprégnation, un seul ou plusieurs sels métalliques différents peuvent être utilisés pour l'imprégnation. En remarque encore, l'étape d'imprégnation peut être mise en oeuvre sur le composant intermédiaire non totalement délianté, la finalisation du déliantage étant réalisée par la suite.

La quatrième étape du procédé consiste à traiter thermiquement E4 le composant intermédiaire délianté (localement) imprégné pour obtenir le composant finalisé ou quasi finalisé, ce qui consiste à le fritter et à le réduire.

Comme cela est connu, le frittage permet de densifier le composant en éliminant les pores provenant du déliantage (ou en poursuivant l'élimination des pores, si l'étape E2 a intégré un pré-frittage). Le frittage consiste en un traitement thermique, plus particulièrement en une cuisson à haute température.

Les propriétés mécaniques finales ainsi que les couleurs finales du composant apparaissent uniquement à la fin de cette quatrième étape E4 et sont issues des réactions entre les différents constituants du composant et également avec les gaz présents dans le four, qui interviennent lors du traitement thermique. Ces réactions sont complexes.

Selon un premier mode de réalisation, la quatrième étape de traitement thermique comprend avantageusement au moins deux sous-étapes réalisées dans des conditions différentes.

Notamment, la première sous-étape consiste en un frittage oxydant E41, préférentiellement à l'air. Pour cela, un traitement thermique à une température comprise entre 1400°C et 1650°C, voire entre 1450°C et 1550°C, pendant un palier thermique d'au moins trente minutes, est avantageusement mis en oeuvre. En variante, un traitement thermique dans toute autre atmosphère oxydante pourrait être mis en oeuvre. A la fin de cette première sous-étape, on note que les zones imprégnées et non imprégnées du composant intermédiaire délianté présentent des couleurs différentes entre elles. De plus, ces couleurs sont des couleurs intermédiaires.

Le procédé comprend ensuite au moins une deuxième sous-étape de traitement thermique du composant sous atmosphère réductrice E42. Cette deuxième sous-étape permet de modifier la couleur d'au moins une des zones du composant. Particulièrement, la réduction totale ou partielle de l'oxyde de cérium (de Ce +IV à Ce +III) permet de former sur au moins une zone non imprégnée du composant une couleur allant du rouge vif au orange. D'autre part, on constate aussi qu'il est possible d'obtenir une couleur très foncée des zones imprégnées, notamment une couleur noire (notamment après une imprégnation avec des sels de cobalt). En variante, on constate aussi qu'il est possible d'obtenir une couleur plus claire des zones imprégnées, notamment une couleur orange (notamment après une imprégnation avec des sels d'aluminium). Ainsi, le procédé selon l'invention est particulièrement adapté pour obtenir une céramique bicolore, notamment rouge et noire ou rouge et orange, présentant un aspect très attractif. Pour la deuxième sous-étape de traitement thermique du composant sous atmosphère réductrice E42, un traitement thermique à une température comprise entre 1200°C et 1550°C, voire entre 1350°C et 1500°C, pendant un palier thermique d'au moins trente minutes, est avantageusement mis en oeuvre. Pour E42, l'atmosphère contient avantageusement de l'hydrogène, notamment pur, ou en mélange par exemple avec de l'azote, ou avec un gaz neutre comme l'argon. A la fin de cette deuxième sous-étape de traitement thermique réducteur, les couleurs définitives sont obtenues, qui diffèrent des couleurs intermédiaires.

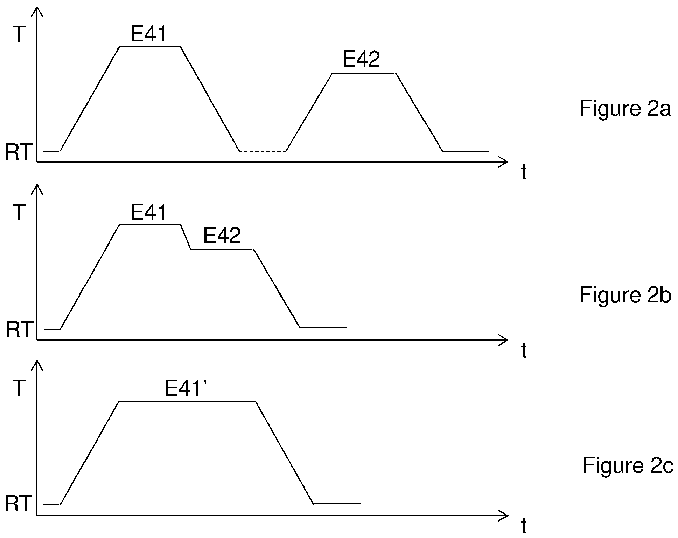

La figure 2a illustre l'évolution de la température en fonction du temps pour les deux sous-étapes E41 et E42, selon le premier mode de réalisation décrit ci-dessus. A la fin de la première sous-étape E41, le composant est refroidi à la température ambiante RT avant d'engager la deuxième sous-étape E42.

En remarque, en variante, les deux sous-étapes E41 (frittage oxydant) et E42 (traitement thermique réducteur) peuvent s'enchaîner sans nécessiter de refroidir le composant à température ambiante. Ainsi, toute l'étape E4 peut être réalisée dans un même four, dans lequel le gaz serait changé (pour passer d'une atmosphère oxydante à une atmosphère réductrice). Cette variante de réalisation est schématisée par la figure 2b.

En remarque, selon une autre variante, les deux sous-étapes E41 (ayant pour but le frittage) et E42 (ayant pour but le traitement thermique réducteur) peuvent être confondues en une seule étape E41' de frittage réducteur. Cette variante est schématisée par la figure 2c. Pour cette étape de frittage réducteur E41', un traitement thermique à une température comprise entre 1400°C et 1650°C, voire entre 1450°C et 1550°C, pendant un palier thermique d'au moins une heure, est avantageusement mis en œuvre. De plus, l'atmosphère contient avantageusement de l'hydrogène, notamment pur, ou en mélange par exemple avec de l'azote, ou avec un gaz neutre comme l'argon.

Dans les trois variantes du mode de réalisation, il est possible d'obtenir un composant ou une partie de composant en céramique bicolore.

Optionnellement, le procédé de fabrication du composant peut comprendre une étape supplémentaire consistant à pratiquer des creusures depuis la surface du composant horloger (issu de l'étape E2, E3 ou E4), par exemple à l'aide d'un laser ou d'un outil traditionnel. Optionnellement, le procédé peut comprendre une étape supplémentaire consistant à revêtir tout ou partie de la surface du composant horloger issu de l'étape de frittage pour déposer un revêtement sur tout ou partie de sa surface, par exemple dans des creusures.

Une telle étape de revêtement peut être réalisée par la technique de dépôt en phase vapeur (PVD, Physical Vapor Déposition). Elle permet par exemple de déposer un métal, comme du platine, avantageusement avec une couche d'accroche. Enfin, le procédé peut comprendre une autre étape de terminaison, optionnelle, par exemple de rectification et/ou de polissage et/ou sablage et/ou satinage.

Finalement, le procédé de fabrication d'un composant horloger selon l'invention présente les avantages suivants :
- L'imprégnation réalisée permet d'atteindre une coloration sur une profondeur significative du composant, et non seulement de manière superficielle. Ainsi, en cas d'usure en surface, il n'y a pas d'impact sur la couleur du composant ;
- Les au moins deux parties de couleurs différentes du composant se présentent de manière monobloc, d'un seul tenant. Autrement dit, il n'y a pas de frontière ou d'interface fragile entre ces deux parties, comme ce serait le cas si les deux couleurs étaient obtenues par des éléments fabriqués au moins en partie séparément et assemblés par la suite ;
- Le composant en céramique technique frittée à base de zircone possède des propriétés mécaniques élevées, compatibles avec les applications horlogères. En effet, il présente notamment une ténacité et une contrainte à la rupture élevées ;
- D'autre part, les différentes couleurs du composant en céramique sont obtenues de manière simple et facilement reproductible ;
- L'imprégnation par les sels forme des pigments lors du frittage, et non une solution solide, ce qui permet d'obtenir une opacité des couleurs. Le procédé est ainsi adapté à l'obtention d'une zone foncée, plus particulièrement à l'obtention d'une zone noire ;
- En complément, le procédé fonctionne avec plusieurs compositions de zircones cériées, qui permettent d'obtenir des zones rouges, dont la couleur précise est maitrisable, notamment en fonction des proportions d'oxyde de cérium et d'alumine utilisées ;
- Il en résulte que le procédé est particulièrement adapté à la fabrication d'une céramique à base de zircone comprenant au moins une partie de couleur noire et une partie de couleur rouge ;
- En complément, le procédé permet d'obtenir une frontière nette entre les zones de couleurs différentes.

L'invention porte aussi sur le matériau lui-même obtenu par le procédé de fabrication selon l'invention, et sur un composant horloger en céramique, à base de zircone cériée, c'est-à-dire une céramique technique frittée à base de zircone cériée. Ce matériau et le composant horloger comprenant ce matériau comprennent avantageusement au moins une première partie dans une première couleur et une deuxième partie dans une deuxième couleur différente de la première couleur, notamment une première partie rouge, et une deuxième partie noire.

En remarque, la couleur de la céramique technique est mesurée par spectrophotométrie. Les mesures sont pratiquées en réflexion avec une ouverture de 7 mm pour un diamètre de mesure de 4 mm ; la géométrie de l'appareil de mesure correspond à une illumination diffuse et une mesure des spectres à 8°. Si le composant ne présente pas une superficie plane suffisante, une pastille témoin est utilisée pour faire la mesure. Les mesures de réflectance sont réalisées entre 360 nm et 740 nm, et l'évaluation de la couleur s'effectue avec l'hypothèse d'un observateur à 10° et l'illuminant D65. La luminosité L* et les valeurs chromatiques a* et b*, le chroma C* et l'angle de teinte h*, sont évaluées dans l'espace défini par la Commission Internationale de l'Eclairage, CIE L*a*b*, comme indiqué dans le « Technical Report of Colorimetry » CIE 15 : 2004. Les mesures sont réalisées en mode SCI (Specular Component Included) et SCE (Specular Component Excluded). De plus, la mesure de spectrophotométrie est réalisée sur un composant avec un état de surface poli, présentant de préférence une rugosité définie par un paramètre de rugosité normalisé Ra valant 2 nm ± 0.2 nm. En remarque, le paramètre Ra est mesuré selon la norme (ISO 4287).

Ainsi, plus précisément, selon l'approche normalisée explicitée ci-dessus, l'invention permet de former un composant horloger en céramique multicolore, pouvant comprendre au moins une partie de couleur rouge, définie par les paramètres suivants de colorimétrie en mode SCI : L* compris entre 47.5 et 54.1, voire L* compris entre 47.8 et 49.5, voire L* compris entre 48.0 et 49.2, a* compris entre 11.7 et 25.1, voire a* compris entre 14.4 et 17.7, voire a* compris entre 13.4 et 16.4, et b* compris entre 5.2 et 15.5, voire b* compris entre 5.8 et 8.8, voire b* compris entre 5.9 et 8.0. De plus, le composant peut comprendre au moins une partie de couleur foncée, notamment noire, définie par les paramètres suivants de colorimétrie en mode SCI : L* inférieur à 47.0, voire L* inférieur à 45.6, voire L* inférieur à 45.4, ou L* compris entre 43.0 et 47.0, voire L* compris entre 44.3 et 45.6, voire L* compris entre 45.0 et 45.4, a* compris entre -0.5 et 1, voire a* compris entre -0.1 et 1.0, voire a* compris entre 0.3 et 0.9, b* compris entre -1 et 1.6, voire b* compris entre -0.8 et 1.4, voire b* compris entre 0.3 et 1.1.

De plus, le composant horloger comprenant ce matériau à base de céramique technique se présente sous une forme monobloc et/ou formant une seule pièce. Il est même d'un seul tenant. En effet, il n'existe aucune discontinuité physique mécanique entre deux parties de couleur différente de matière qui introduirait une fragilisation, comme ce serait le cas avec deux parties distinctes assemblées, par exemple par un procédé de surmoulage ou de bi-injection ou de co-pressage, suite auquel il existe toujours un risque de séparation accidentelle des deux parties distinctes assemblées, ce qui n'est pas le cas avec le composant de l'invention. Le composant horloger présente notamment une continuité de concentration ou de composition chimique en cérium, en plus de la continuité de la zircone. Le composant comprend au moins une continuité de concentration en son coeur pour ces deux éléments (Zr et Ce), mais pas pour les éléments d'ajout, ce coeur étant identique et continu, d'un seul tenant, dans des parties de couleur différente du composant horloger. Ce cœur peut être considéré comme les zones de profondeurs suffisantes dans le matériau, qui ne sont pas impactées par les colorations du procédé, décrites précédemment ; en variante, on peut mettre en oeuvre des paramètres d'imprégnation qui colorent toute la profondeur de fines pièces. En complément, le composant horloger est mis en forme par une unique phase de fabrication, qui permet d'atteindre la forme finale à partir de la même matière première, par exemple à partir d'une même poudre céramique, et simultanément, lors d'une même opération de frittage, pour au moins deux parties de couleur différente.

Le matériau à base de zircone cériée de l'invention comprend avantageusement une proportion massique d'oxyde de cérium comprise entre 3 et 5% (noté wt%).

L'invention porte aussi naturellement sur un composant horloger comprenant une telle céramique technique, à base de zircone cériée et frittée. Un tel composant horloger peut être une lunette de montre, un cadran, un index, une couronne de remontoir, un poussoir, ou tout autre élément d'habillage horloger, ou tout élément d'un mouvement horloger. Ce composant horloger peut se présenter intégralement dans le matériau céramique à base de zircone cériée ou en variante partiellement. Par exemple, ce composant horloger peut comprendre un corps intégralement en céramique à base de zircone cériée selon l'invention, sur lequel d'autres éléments distincts sont fixés.

L'invention porte aussi sur une pièce d'horlogerie, notamment une montre-bracelet, comprenant une telle céramique technique frittée selon l'invention ou au moins un composant horloger tel que décrit ci-dessus.

Quelques exemples de mise en oeuvre de l'invention vont être décrits ci-dessous.

Selon un premier exemple, le composant horloger fabriqué est un disque de lunette.

La première étape du procédé comprend les sous-étapes détaillées ci-après, qui correspondent au procédé plus général décrit précédemment.

La première sous-étape consiste à sélectionner la matière première : selon cet exemple, le choix est orienté sur une poudre céramique à base de zircone, stabilisée à l'yttria (3% molaire), contenant de l'oxyde de cérium (3% massique) et de l'alumine (0.1% massique).

La deuxième sous-étape du procédé consiste à intégrer le liant à la poudre céramique obtenue par la première sous-étape, pour obtenir un feedstock.

La troisième sous-étape consiste en la mise en forme du composant en céramique par injection dans un moule. On obtient alors un disque de lunette en zircone cériée crue, liantée, constituant un corps vert, qui correspond au composant intermédiaire selon la dénomination choisie précédemment.

La deuxième étape consiste à délianter le corps vert par un traitement thermique, et intègre dans ce cas un pré-frittage. Le déliantage et le pré-frittage sont réalisés par un unique traitement thermique. Les composants intermédiaires sont chauffés à au moins 750°C durant une heure, dans un four à l'air ambiant.

La troisième étape du procédé est l'étape d'imprégnation. Pour cela, on utilise une solution aqueuse dans laquelle l'élément additionnel est présent sous la forme d'un sel métallique. L'imprégnation est réalisée ici manuellement (elle pourrait l'être en variante par jet d'encre), en employant une solution aqueuse de sels d'aluminium et cobalt, réalisée par exemple par solubilisation des solides suivants : Al(NO₃)₃·9H₂O, Co(NO₃)₂·6H₂O pour obtenir une solution de composition suivante : 1 M Al(NO₃)₃ et 0.5 M Co(NO₃)₂. L'imprégnation est réalisée sur une moitié de l'anneau formant le futur disque de lunette.

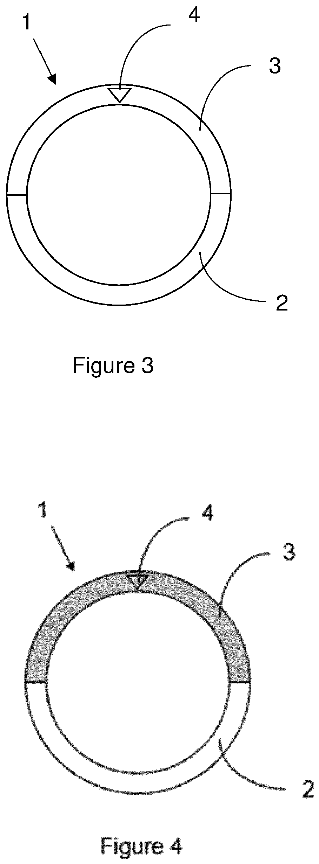

Enfin, la quatrième étape de traitement thermique comprend d'abord un frittage avec un palier thermique de 2 heures à 1480°C, à l'air ambiant. À l'issue de ce premier traitement thermique (qui forme une première sous-étape de frittage oxydant), le disque de lunette 1, représenté schématiquement par la figure 3, est jaune à l'emplacement non imprégné 2 et bleu à l'emplacement imprégné 3 (ce bleu étant dû à la formation de composés CoAl₂O₄ formés à partir des sels de cobalt apportés par imprégnation). Dans cet exemple, le disque de lunette est ensuite rectifié. La quatrième étape de traitement thermique comprend ensuite une deuxième sous-étape comprenant un traitement thermique sous atmosphère réductrice. Le disque de lunette est soumis à un traitement thermique avec un palier thermique d'une heure à 1400°C dans une atmosphère réductrice composée d'hydrogène H₂ et d'argon Ar. La zircone cériée devient rouge à l'issue de ce traitement thermique réducteur, dans les zones non imprégnées 2. Les zones imprégnées 3, qui étaient bleues à l'issue du frittage à l'air, deviennent noires, comme représenté sur la figure 4.

Ainsi, à la fin du procédé selon l'invention, le disque de lunette en zircone cériée est bicolore : il est rouge à l'emplacement non imprégné et noir à l'emplacement imprégné.

Dans cet exemple, les disques de lunette, qui comprennent des creusures 4 (voir figures 3, 4) (notamment formées lors de l'injection), sont ensuite sablés, revêtus d'un dépôt de platine par PVD, puis polis. Ainsi, les creusures ont la couleur du platine, et le disque de lunette est bicolore, noir et rouge.

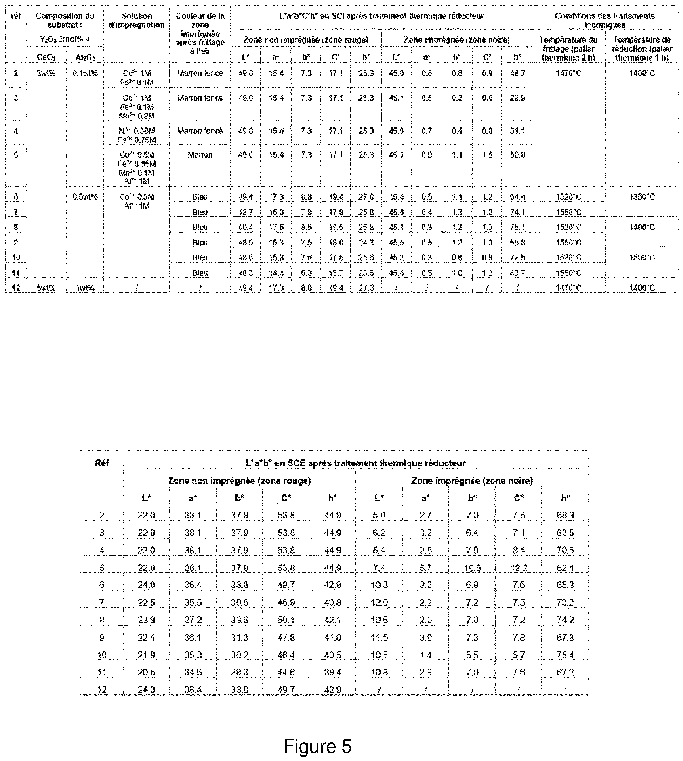

Naturellement, l'invention ne se limite pas à l'exemple précédent. A cet effet, le tableau présenté en figure 5 illustre des exemples supplémentaires (numérotés de 2 à 12), correspondant à différents modes de réalisation de l'invention. Entre ces exemples, différents paramètres sont modifiés, parmi lesquels la composition de la poudre de céramique, celle de la solution d'imprégnation (nature des sels métalliques, concentration, etc.), la température de déliantage, la température de frittage sous air, la température de réduction (laquelle est réalisée sous formiergaz (mélange réducteur d'hydrogène H₂ et d'azote N₂) pour les échantillons 2 à 5 et 12 ; et dans un mélange de 20% d'hydrogène et de 80% d'argon pour les échantillons 6 à 11). Les couleurs résultantes sont mesurées par spectrophotométrie, comme précisé précédemment. Les résultats illustrent que l'on peut obtenir des composants en zircone cériée, de deux couleurs : ici, l'une est rouge (et peut avoir plusieurs nuances, jusqu'au orange) et l'autre est noire (avec plusieurs valeurs de L*a*b*C*h*). En remarque, la surface des composants est polie. Pour cela, la rugosité de cette surface polie est définie par le paramètre de rugosité normalisé Ra, valant 2 nm ± 0.2 nm. Ce paramètre Ra est mesuré selon la norme ISO 4287 ; il représente la hauteur moyenne (arithmétique) de la rugosité. L'échantillon de référence 12 est monochrome car il n'a pas été imprégné. Nous obtenons par ce procédé des exemples de composants bicolores dont la partie rouge peut être décrite par L* compris entre 48.3 et 49.4, a* compris entre 14.4 et 17.6, b* compris entre 6.3 et 8.8, en mode SCI et L* compris entre 20.5 et 24.0, a* compris entre 34.5 et 38.1, b* compris entre 28.3 et 37.9, en mode SCE ; la partie noire peut être décrite par L* compris entre 45 et 45.6, a* compris entre 0.3 et 0.9, b* compris entre 0.3 et 1.3, en mode SCI et L* compris entre 5.0 et 12.0, a* compris entre 1.4 et 5.7, b* compris entre 5.5 et 10.8, en mode SCE.

Dans tous les exemples, la zircone utilisée est stabilisée avec de l'oxyde d'yttrium, selon une proportion de 3% molaire d'oxyde d'yttrium. Cette proportion pourrait variée sans sortir de l'invention, par exemple dans la plage entre 1.4% molaire et 4% molaire. De plus, les proportions d'oxyde de cérium dans la zircone yttriée peuvent varier ; une proportion de 3% massique est choisie dans ces exemples. Les proportions d'alumine du substrat peuvent également varier : des proportions de 0.1 % et de 0.5% massique sont choisies selon ces exemples.

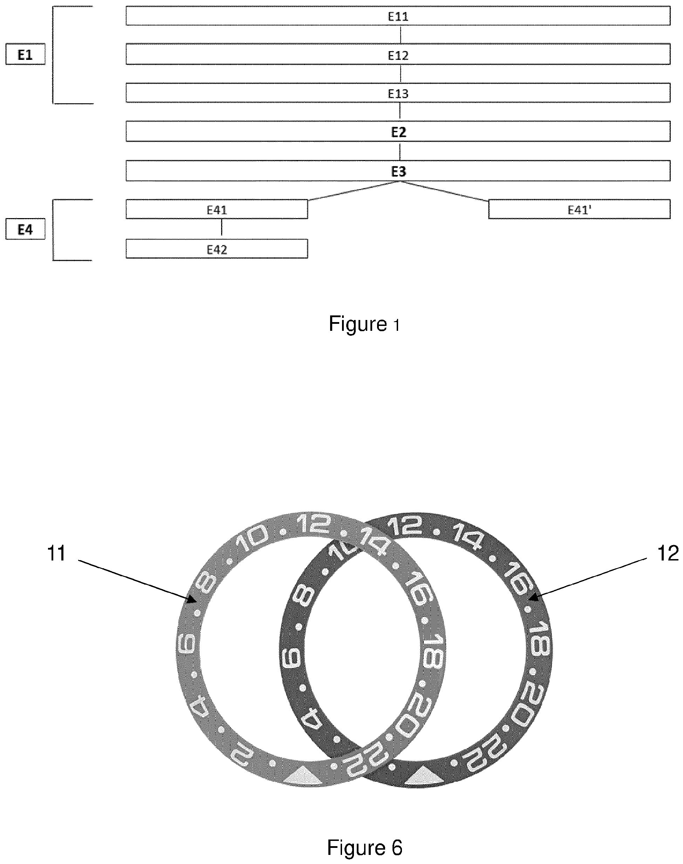

La figure 6 illustre un exemple d'impact de la variation de proportion d'oxyde de cérium et d'alumine dans la matière première choisie, sur la couleur rouge résultante, après un frittage à l'air avec un palier thermique de deux heures à 1470°C et une réduction avec un palier thermique d'une heure à 1400°C sous atmosphère réductrice composée de formiergaz. Le composant situé sur la gauche de la figure 6 est un disque de lunette 11 de couleur orangée, en zircone yttriée contenant 5% massique d'oxyde de cérium CeO₂ et 1% massique d'alumine Al₂O₃, correspondant à l'exemple 12 dans les tableaux de la figure 5. Le composant situé sur la droite de la figure 6 est un disque de lunette 12, en zircone yttriée, de couleur rouge, contenant 3% massique d'oxyde de cérium CeO₂ et 0.1% massique d'alumine Al₂O₃ (en termes de composition et de traitements thermiques, cette dernière correspond aux zones rouges des composants constituants les exemples 2 à 5 du tableau de la figure 5). En remarque, aucun de ces deux composants n'a été imprégné.

En complément des éléments précédents, plusieurs autres paramètres de fabrication ont un impact, notamment sur les couleurs. L'homme du métier pourra définir ces paramètres selon le résultat souhaité. Les principaux sont :
- L'atmosphère gazeuse utilisée pour le traitement réducteur. Elle peut par exemple contenir de l'hydrogène dans différentes proportions (de 5% à 100%) et avoir différents gaz complémentaires, notamment de l'argon Ar et/ou de l'azote N₂. Le flux de gaz dans l'enceinte est lui aussi variable ;
- Les températures de frittage à l'air, ou plus généralement en atmosphère oxydante, ou en variante en atmosphère réductrice (étape E41'), avantageusement comprises entre 1400°C et 1650°C, et plus particulièrement comprises entre 1450°C et 1550°C et/ou pendant un palier thermique d'au moins trente minutes pour E41 ou au moins une heure pour E41' ;
- Les durées du palier thermique de frittage, qui peuvent varier de 30 minutes à quelques heures ;
- Les températures de réduction dans la deuxième sous-étape de traitement thermique en atmosphère réductrice E42, avantageusement comprises entre 1200°C et 1550°C, et plus particulièrement comprises entre 1350°C et 1500°C ;
- La durée du palier thermique de réduction, avantageusement comprise entre 30 minutes et quelques heures pour E42.
- Le mode de mise en forme (injection, pressage, etc.).

## Revendications

1. Procédé de fabrication d'un composant horloger en céramique, **caractérisé en ce qu'**il comprend les étapes suivantes :
- Fabriquer un composant intermédiaire (E1) sous forme de corps vert à base de zircone cériée,
- Délianter (E2) totalement ou partiellement le composant intermédiaire pour obtenir un composant intermédiaire délianté ;
- Imprégner (E3) localement le composant intermédiaire délianté avec au moins une solution comprenant au moins un sel métallique, depuis une partie seulement de sa surface, pour obtenir un composant intermédiaire délianté imprégné ;
- Fritter et traiter thermiquement (E4) le composant intermédiaire délianté imprégné par au moins une étape de traitement thermique sous atmosphère réductrice (E42 ; E41').

2. Procédé de fabrication d'un composant horloger en céramique selon la revendication précédente, **caractérisé en ce que** l'étape consistant à fritter et traiter thermiquement (E4) le composant intermédiaire délianté imprégné comprend une première sous-étape consistant à fritter sous atmosphère oxydante (E41) le composant intermédiaire délianté imprégné, avant la mise en oeuvre d'une deuxième sous-étape de traitement thermique sous atmosphère réductrice (E42) ou **en ce qu'**elle comprend une seule étape de frittage réducteur (E41').

3. Procédé de fabrication d'un composant horloger en céramique selon l'une des revendications précédentes, **caractérisé en ce que** l'étape consistant à fabriquer un composant intermédiaire (E1) sous forme de corps vert en zircone cériée utilise une poudre céramique à base de zircone, stabilisée à l'yttria, notamment comprenant une proportion entre 1.4% et 4% molaire d'oxyde d'yttrium Y₂O₃ calculée par rapport à la zircone et comprenant de l'oxyde de cérium en proportion massique comprise entre 3% et 6% voire entre 3% et 5%.

4. Procédé de fabrication d'un composant horloger en céramique selon la revendication précédente, **caractérisé en ce que** ladite poudre céramique à base de zircone comprend de l'alumine selon une proportion massique comprise entre 0.1% et 1%.

5. Procédé de fabrication d'un composant horloger en céramique selon l'une des revendications précédentes, **caractérisé en ce que** l'étape consistant à fritter et traiter thermiquement (E4) le composant intermédiaire délianté imprégné comprend une première sous-étape consistant à fritter sous atmosphère oxydante (E41) le composant intermédiaire délianté imprégné, puis une deuxième sous-étape de traitement thermique sous atmosphère réductrice (E42), la première sous-étape consistant à fritter sous atmosphère oxydante (E41) le composant intermédiaire délianté imprégné soumettant ledit composant intermédiaire délianté imprégné à une température comprise entre 1400°C et 1650°C, voire entre 1450°C et 1550°C, pendant un palier thermique d'au moins trente minutes, et/ou la deuxième sous-étape de traitement thermique sous atmosphère réductrice (E42) soumettant ledit composant intermédiaire délianté imprégné à une température comprise entre 1200°C et 1550°C, voire entre 1350°C et 1500°C, dans une atmosphère réductrice, notamment comprenant du H₂, avec un palier thermique d'au moins trente minutes.

6. Procédé de fabrication d'un composant horloger en céramique selon l'une des revendications 1 à 4, **caractérisé en ce que** l'étape consistant à fritter et traiter thermiquement (E4) le composant intermédiaire délianté imprégné comprend une seule étape de frittage réducteur (E41') soumettant ledit composant intermédiaire délianté imprégné à une température comprise entre 1400°C et 1650°C, voire entre 1450°C et 1550°C, dans une atmosphère réductrice, notamment comprenant du H₂, pendant un palier thermique d'au moins une heure.

7. Procédé de fabrication d'un composant horloger en céramique selon l'une des revendications précédentes, **caractérisé en ce que** l'étape consistant à imprégner (E3) partiellement le composant intermédiaire délianté utilise une solution comprenant au moins un sel métallique choisi parmi Co, Fe, Mn, Ni, Al.

8. Procédé de fabrication d'un composant horloger en céramique selon la revendication précédente, **caractérisé en ce que** ladite étape consistant à fritter et traiter thermiquement (E4) le composant intermédiaire délianté imprégné permet de former un composant horloger en céramique multicolore, comprenant au moins une première partie de surface non imprégnée présentant une couleur rouge, définie par les paramètres de colorimétrie en mode SCI, L* compris entre 47.5 et 54.1, voire L* compris entre 47.8 et 49.5, voire L* compris entre 48.0 et 49.2, a* compris entre 11.7 et 25.1, voire a* compris entre 14.4 et 17.7, voire a* compris entre 13.4 et 16.4, b* compris entre 5.2 et 15.5, voire b* compris entre 5.8 et 8.8, voire b* compris entre 5.9 et 8.0, et/ou au moins une deuxième partie de couleur foncée dans une surface imprégnée, notamment noire, définie par les paramètres de colorimétrie en mode SCI, L* inférieur à 47.0, voire L* inférieur à 45.6, voire L* inférieur à 45.4, a* compris entre -0.5 et 1, voire a* compris entre -0.1 et 1.0, voire a* compris entre 0.3 et 0.9, b* compris entre -1 et 1.6, voire b* compris entre -0.8 et 1.4, voire b* compris entre 0.3 et 1.1, la mesure de spectrophotométrie étant réalisée sur un composant avec un état de surface poli.

9. Procédé de fabrication d'un composant horloger en céramique selon l'une des revendications précédentes, **caractérisé en ce qu'**il comprend une étape supplémentaire consistant à revêtir tout ou partie de la surface du composant horloger issu de l'étape de frittage, notamment par PVD, et/ou une étape supplémentaire de rectification et/ou polissage et/ou sablage et/ou satinage.

10. Composant horloger en céramique, **caractérisé en ce qu'**il est à base de zircone cériée, **en ce qu'**il est monobloc d'un seul tenant et bicolore, voire multicolore, comprenant au moins une première partie dans une première couleur et une deuxième partie dans une deuxième couleur différente de la première couleur, notamment comprenant une première couleur rouge et une deuxième couleur noire.

11. Composant horloger en céramique selon la revendication précédente, **caractérisé en ce qu'**il comprend au moins un coeur continu, au moins mécaniquement et/ou en concentration, notamment en concentration de cérium, s'étendant de la au moins une première partie à la au moins une deuxième partie.

12. Composant horloger en céramique selon la revendication 10 ou 11, **caractérisé en ce qu'**au moins la première partie et la deuxième partie sont obtenues à partir d'une même poudre mise en forme dans une même opération, et traitée thermiquement dans une même opération.

13. Composant horloger en céramique selon l'une des revendications 10 à 12, **caractérisé en ce qu'**il comprend une proportion massique d'oxyde de cérium comprise entre 3 et 5%.

14. Composant horloger en céramique selon l'une des revendications 10 à 13, **caractérisé en ce que** la première partie est une partie de couleur rouge définie par les paramètres de colorimétrie en mode SCI, L* compris entre 47.5 et 54.1, voire L* compris entre 47.8 et 49.5, voire L* compris entre 48.0 et 49.2, a* compris entre 11.7 et 25.1, voire a* compris entre 14.4 et 17.7, voire a* compris entre 13.4 et 16.4, b* compris entre 5.2 et 15.5, voire b* compris entre 5.8 et 8.8, voire b* compris entre 5.9 et 8.0, et/ou **en ce que** la deuxième partie est une partie de couleur noire définie par les paramètres de colorimétrie en mode SCI, L* inférieur à 47.0, voire L* inférieur à 45.6, voire L* inférieur à 45.4, a* compris entre -0.5 et 1, voire a* compris entre -0.1 et 1.0, voire a* compris entre 0.3 et 0.9, b* compris entre -1 et 1.6, voire b* compris entre -0.8 et 1.4, voire b* compris entre 0.3 et 1.1, la mesure de spectrophotométrie étant réalisée sur un composant avec un état de surface poli.

15. Composant horloger en céramique selon l'une des revendications 10 à 14, **caractérisé en ce qu'**il est une lunette de montre, un cadran, un index, une couronne de remontoir, un poussoir ou tout autre élément d'habillage horloger ou tout élément d'un mouvement horloger.

16. Pièce d'horlogerie ou de joaillerie, **caractérisée en ce qu'**elle comprend un composant horloger en céramique selon l'une des revendications 10 à 15.
